(19) Europäisches Patentamt
European Patent Office
Office européen des brevets

(11) **EP 3 872 742 A1**

(12) **EUROPEAN PATENT APPLICATION**
published in accordance with Art. 153(4) EPC

(43) Date of publication:
**01.09.2021 Bulletin 2021/35**

(51) Int Cl.:
**G06Q 50/06** (2012.01)   **H02J 3/00** (2006.01)

(21) Application number: **19876063.9**

(22) Date of filing: **25.09.2019**

(86) International application number:
**PCT/JP2019/037635**

(87) International publication number:
**WO 2020/084991 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2018   JP 2018199358**

(71) Applicant: **Mitsubishi Power, Ltd.**
**Yokohama-shi, Kanagawa 220-8401 (JP)**

(72) Inventors:
• **SHIMO Hisashi**
  **Yokohama-shi, Kanagawa 220-8401 (JP)**
• **KATO Masayuki**
  **Yokohama-shi, Kanagawa 220-8401 (JP)**
• **IKEDA Michihiko**
  **Yokohama-shi, Kanagawa 220-8401 (JP)**
• **NAGAFUCHI Naoyuki**
  **Yokohama-shi, Kanagawa 220-8401 (JP)**

(74) Representative: **Henkel & Partner mbB**
**Patentanwaltskanzlei, Rechtsanwaltskanzlei**
**Maximiliansplatz 21**
**80333 München (DE)**

(54) **COMPUTING DEVICE, SYSTEM, NOTIFYING DEVICE, COMPUTING METHOD, AND PROGRAM**

(57)    A computing device includes a fuel price identifying unit that is configured to identify, based on a load plan and information on prediction of weather conditions, a fuel price in a case where motive power of a cooling water cooling device is varied, and a balance identifying unit that is configured to identify, based on the selling price of the generated electric power and the fuel price, at least a balance that is greater than a balance obtained by generated electric power according to the load plan in a case where a current operation is continued.

FIG. 4

EP 3 872 742 A1

**Description**

[Technical Field]

The present invention relates to a computing device, a system, a notifying device, a computing method, and a program.
Priority is claimed on Japanese Patent Application No. 2018-199358, filed October 23, 2018, the content of which is incorporated herein by reference.

[Background Art]

There are plants that generate electric power using a steam turbine. In such plants, it is necessary to cool steam in order to condense the steam into water.
In a case where nearby seawater or river water is abundantly available, steam is cooled by using this water as cooling water. On the other hand, in a case where there is no abundantly available seawater or river water nearby, steam is cooled by cooling and circulating water from the atmosphere using a cooling tower or by directly cooling water with the atmosphere.
When cooling with seawater or river water, cooling with circulating water of a cooling tower, or direct cooling with the atmosphere is performed, steam is cooled by operating pumps or fans using electricity to secure cooling water or secure the atmosphere. Therefore, operating states required for pumps or fans fluctuate depending on the operating state of a steam turbine, the weather conditions (temperature or humidity), the maritime conditions (water temperature or tide level), or the state of a river (water temperature or water level). Generally, plants are set up to be capable of operating stably.
Patent Document 1 discloses a technique of controlling fans of a cooling tower that cool cooling water as a relevant technique.

[Citation List]

[Patent Literature]

[Patent Document 1]
Japanese Unexamined Patent Application, First Publication No. 2013-155963

[Summary of Invention]

[Technical Problem]

Incidentally, a plant that generates electric power using a steam turbine requires a high profit from generated electric power in addition to stable operation, and requires a technique of providing such a degree of profit.
An object of the present invention is to provide a computing device, a system, a notifying device, a computing method, and a program that make it possible to solve the above problem.

[Solution to Problem]

According to a first aspect of the present invention, a computing device includes a fuel price identifying unit that is configured to identify, based on a load plan and information on prediction of weather conditions, a fuel price in a case where motive power of a cooling water cooling device is varied; and a balance identifying unit that is configured to identify, based on a selling price of the generated electric power and the fuel price, at least a balance that is greater than a balance obtained by generated electric power according to the load plan in a case where a current operation is continued.
According to a second aspect of the present invention, in the computing device of the first aspect, the fuel price identifying unit may be configured to identify the fuel price in a case where the motive power of the cooling water cooling device is varied using a future fluctuation predicted value of the fuel price when the fuel price fluctuates over time, and the balance identifying unit may be configured to identify at least the balance that is greater than the balance obtained by the generated electric power in a case where the current operation is continued using a future fluctuation predicted value of the selling price of the generated electric power when the selling price of the generated electric power fluctuates over time.
According to a third aspect of the present invention, in the computing device of the first or second aspect, the balance identifying unit may be configured to identify conditions including at least the motive power corresponding to the identified balance that is greater than the balance obtained by the generated electric power in a case where the current operation is continued.

According to a fourth aspect of the present invention, the computing device of any one of the first to third aspects may further include a comparing unit that compares two balances, wherein the fuel price identifying unit may be configured to identify the fuel price with respect to current motive power of the cooling device, the balance identifying unit may be configured to identify a balance for the current motive power and the balance that is greater than the balance obtained by the generated electric power in a case where the current operation is continued, and the comparing unit is configured to identify a difference between the balance for the current motive power and the balance that is greater than the balance obtained by the generated electric power in a case where the current operation is continued by comparing the balance for the current motive power with the balance that is greater than the balance obtained by the generated electric power in a case where the current operation is continued.

According to a fifth aspect of the present invention, in the computing device of the fourth aspect, the comparing unit may be configured to accumulate the identified difference over time.

According to a sixth aspect of the present invention, the computing device of any one of the first to fifth aspects may further include an information transferring unit that outputs the balance.

According to a seventh aspect of the present invention, in the computing device of any one of the first to sixth aspects, the fuel price identifying unit may be configured to identify, based on a difference between a fuel price according to the timing of electric power storage and a fuel price according to the timing of electric power selling, the fuel price in a case where the motive power of the cooling water cooling device is varied when a timing at which the generated electric power is generated and stored and a timing at which the stored generated electric power is sold are different from each other, and the balance identifying unit may be configured to identify, based on a difference between a selling price of generated electric power according to the timing of electric power storage and a selling price of generated electric power according to the timing of electric power selling, at least the balance that is greater than the balance obtained by the generated electric power in a case where the current operation is continued when the timing at which the generated electric power is generated and stored and the timing at which the stored generated electric power is sold are different from each other.

According to an eighth aspect of the present invention, a system includes the computing device according to any one of the first to seventh aspects; and a notifying device that is configured to notify of information relating to the generated electric power.

According to a ninth aspect of the present invention, in the system of the eighth aspect, the information relating to the generated electric power may include at least a current operating number and a recommended operating number; prediction of increase or decrease in transmission end efficiency in a case of the current operating number and transmission end efficiency in a case where the current operating number is changed; or prediction of increase or decrease in motive power of a cooling tower in a case of the current operating number and motive power of the cooling tower in a case where the current operating number is changed.

According to a tenth aspect of the present invention, in the system of the eighth or ninth aspect, the information relating to the generated electric power may include prediction of accumulation of a balance over time.

According to an eleventh aspect of the present invention, in the system of any one of the eighth to tenth aspects, the information relating to the generated electric power may include at least one of an operating load for each predetermined time stamp, a biomass co-firing rate for each predetermined time stamp, atmospheric conditions for each predetermined time stamp, net efficiency for each predetermined time stamp, an electric power selling price for each predetermined time stamp, and a balance for each predetermined time stamp.

According to a twelfth aspect of the present invention, a notifying device is configured to display information relating to generated electric power according to a load plan or atmospheric conditions.

According to a thirteenth aspect of the present invention, in the notifying device of the twelfth aspect, the information relating to the generated electric power may include at least a current operating number and a recommended operating number, or transmission end efficiency in a case of the current operating number, motive power of a cooling tower in a case of the current operating number, prediction of increase or decrease in transmission end efficiency in a case where the current operating number is changed, and prediction of increase or decrease in the motive power of the cooling tower in a case where the current operating number is changed.

According to a fourteenth aspect of the present invention, in the notifying device of the twelfth or thirteenth aspect, the information relating to the generated electric power may include prediction of accumulation of a balance over time.

According to a fifteenth aspect of the present invention, in the notifying device of any one of the twelfth to fourteenth aspects, the information relating to the generated electric power may include at least one of an operating load for each predetermined time stamp, a biomass co-firing rate for each predetermined time stamp, atmospheric conditions for each predetermined time stamp, net efficiency for each predetermined time stamp, an electric power selling price for each predetermined time stamp, and a balance for each predetermined time stamp.

According to a sixteenth aspect of the present invention, a computing method includes identifying, based on a load plan and information on prediction of weather conditions, a fuel price in a case where motive power of a cooling water cooling device is varied; and identifying, based on a selling price of the generated electric power and the fuel price, at least a balance that is greater than a balance obtained by generated electric power according to the load plan in a case where a current operation is continued.

According to a seventeenth aspect of the present invention, a program causes a computer to execute: identifying, based on a load plan and information on prediction of weather conditions, a fuel price in a case where motive power of a cooling water cooling device is varied; and identifying, based on a selling price of the generated electric power and the fuel price, at least a balance that is greater than a balance obtained by generated electric power according to the load plan in a case where a current operation is continued.

[Advantageous Effects of Invention]

According to the computing device, the system, the notifying device, the computing method, and the program according to the embodiment of the present invention, it is possible to provide a degree of profit in a plant that generates electric power using a steam turbine.

[Brief Description of Drawings]

Fig. 1 is a diagram illustrating a configuration of a plant system according to an embodiment of the present invention.
Fig. 2 is a diagram illustrating a configuration of an operating number optimizing unit according to an embodiment of the present invention.
Fig. 3 is a diagram illustrating calculation of a balance in an embodiment of the present invention.
Fig. 4 is a diagram illustrating processing of the operating number optimizing unit according to an embodiment of the present invention.
Fig. 5 is a first diagram illustrating a display example of a diagnosis result notifying unit according to an embodiment of the present invention.
Fig. 6 is a second diagram illustrating a display example of the diagnosis result notifying unit according to an embodiment of the present invention.
Fig. 7 is a third diagram illustrating a display example of the diagnosis result notifying unit according to an embodiment of the present invention.
Fig. 8 is a schematic block diagram illustrating a configuration of a computer according to at least one embodiment.

[Description of Embodiments]

<Embodiments>

Hereinafter, embodiments will be described in detail with reference to the accompanying drawings.

A configuration of a plant system 1 according to an embodiment of the present invention will be described.

The plant system 1 is a system that calculates a balance when net electric power is sold in a case where the motive power of a cooling device that cools cooling water is varied and notifies a difference between different motive powers.

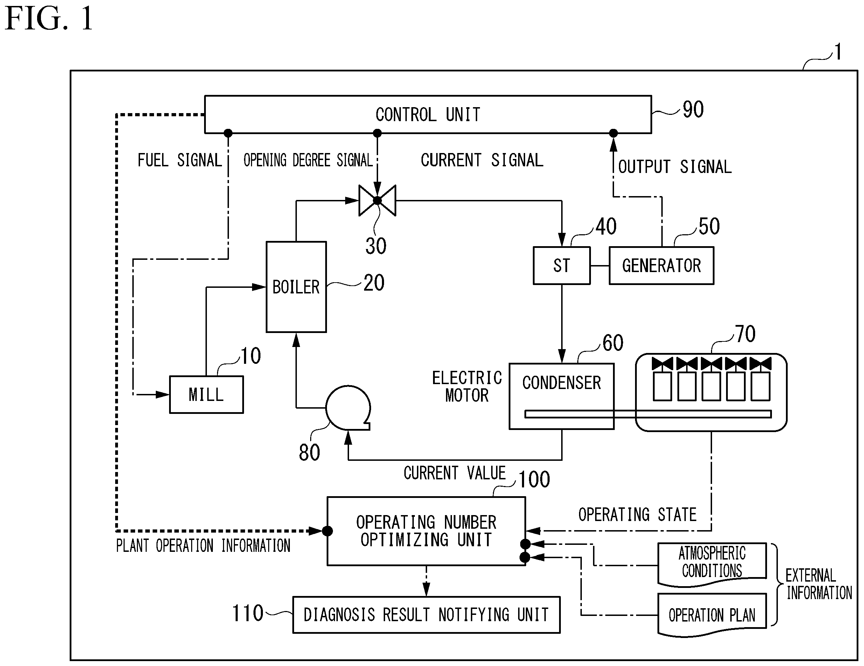

As shown in Fig. 1, the plant system 1 includes a mill 10, a boiler 20, a steam regulating valve 30, a steam turbine 40, a generator 50, a condenser 60, a cooling tower 70 (an example of a cooling device), a water supply pump 80, a control unit 90, an operating number optimizing unit 100 (an example of a computing device), and a diagnosis result notifying unit 110 (an example of a notifying device).

Meanwhile, the operating number optimizing unit 100 may optimize the number of rotations of a fan of the cooling tower 70, the degree of blade opening, an inlet damper, or a combination thereof.

The mill 10 mills fuel. The fuel is, for example, coal or biomass fuel. The mill 10 supplies milled fuel to the boiler 20.

The boiler 20 burns fuel supplied from the mill 10. The boiler 20 gives heat generated by this combustion to water, and converts the water into steam. The boiler 20 supplies the steam to the steam turbine 40 through the steam regulating valve 30.

The steam regulating valve 30 changes the degree of valve opening in accordance with control which is performed by the control unit 90, and supplies amount of steam corresponding to the degree of valve opening from the boiler 20 to the steam turbine 40.

The steam turbine 40 rotates a turbine using the steam supplied from the boiler 20 through the steam regulating valve 30. The rotating shaft of the turbine is connected to the generator 50.

The generator 50 rotates in conjunction with the rotation of the rotating shaft of the turbine in the steam turbine 40. The generator 50 generates electric power by the rotation of this rotating shaft.

The condenser 60 converts steam that rotates the rotating shaft of the turbine in the steam turbine 40 into water by exchanging heat with cooling water and cooling the steam.

The cooling tower 70 includes a cooling tower constituted by a plurality of fans. The cooling tower 70 lowers the temperature of the cooling water by rotating the fans to apply the atmosphere to the cooling water of which the temperature has risen by exchanging heat with steam. The cooling tower 70 outputs an operating state including information on the number of fans in the cooling tower 70 which are operating for cooling the cooling water to the operating number optimizing unit 100.

By the cooling tower 70 cooling the cooling water in this manner, the condenser 60 can convert the steam into water.

The water supply pump 80 raises the pressure of the water converted by the condenser 60, and supplies the water to the boiler.

The control unit 90 controls the mill 10 and the steam regulating valve 30 on the basis of an output of the generator 50. Specifically, the control unit 90 receives an output signal indicating the amount of power generation from the generator 50. The control unit 90 outputs a fuel signal indicating the amount of fuel to be milled to the mill 10 so that the received amount of power generation becomes a target amount of power generation, and outputs an opening degree signal indicating the degree of valve opening to the steam regulating valve 30 so that steam required for electric power generation is supplied to the steam turbine 40.

In addition, the control unit 90 outputs plant operation information indicating the operating state of a plant including the amount of fuel supply indicated by the fuel signal, the degree of valve opening indicated by the opening degree signal, and the amount of power generation indicated by the output signal to the operating number optimizing unit 100.

The operating number optimizing unit 100 receives information on the operating state from the cooling tower 70. The operating number optimizing unit 100 receives the plant operation information from the control unit 90. In addition, the operating number optimizing unit 100 receives, as external information, atmospheric conditions related to the cooling conditions of the cooling tower 70 (an example of information on prediction of the weather conditions at each time) and an operation plan indicating the amount of power generation created on the basis of a demand for electric power at each time. The atmospheric conditions are, for example, atmospheric temperature, atmospheric pressure, relative humidity, and the like. The operating number optimizing unit 100 calculates a balance of electric power generation for each different number of operating fans in the cooling tower 70 on the basis of the operating state, the plant operation information, the atmospheric conditions, and the operation plan.

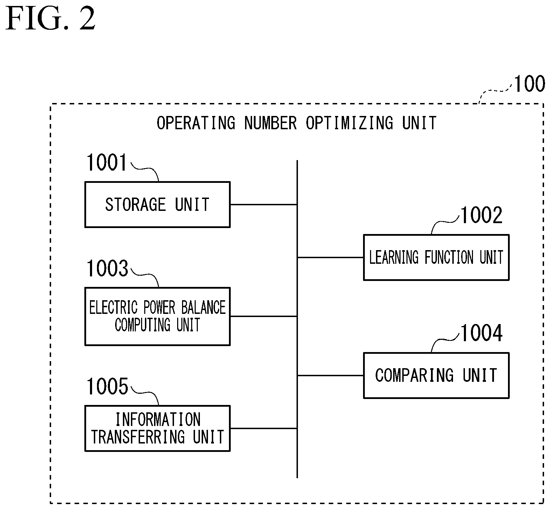

As shown in Fig. 2, the operating number optimizing unit 100 includes a storage unit 1001, a learning function unit 1002, an electric power balance computing unit 1003 (an example of a fuel price identifying unit and an example of a balance identifying unit), a comparing unit 1004, and an information transferring unit 1005.

The storage unit 1001 stores various types of information required for processing performed by the operating number optimizing unit 100. For example, the storage unit 1001 stores operation result data. Specifically, the operation result data is result data from past operations including data indicating a relationship between a condenser vacuum degree indicating the vacuum degree of a condenser (equivalent to the number of operating fans in the cooling tower 70) and plant efficiency indicating power generation efficiency, which will be described later, for each operation plan and atmospheric condition.

The learning function unit 1002 is a device having a learned model and having a learning function of drawing a curve of the plant efficiency indicating power generation efficiency with respect to the condenser vacuum degree indicating the vacuum degree of a condenser which will be described later when the atmospheric conditions and the operation plan are input.

The electric power balance computing unit 1003 calculates the plant efficiency in a case where the current operation is continued on the basis of a learned model generated by learning by the learning function unit 1002, current operation data, and external information. In addition, the electric power balance computing unit 1003 calculates the balance of electric power or a difference in the balance in a case where the current operation is continued (all other parts described as a balance may be a difference in balance).

In addition, the electric power balance computing unit 1003 calculates the plant efficiency in a case where the number of operating fans in the cooling tower 70 is changed on the basis of the learned model generated by learning by the learning function unit 1002, the external information, and the number of different operating fans in the cooling tower 70. In addition, the electric power balance computing unit 1003 calculates a balance of electric power in a case where the number of operating fans in the cooling tower 70 is changed.

The comparing unit 1004 compares a balance of electric power in a case where the current operation calculated by the electric power balance computing unit 1003 is continued with a balance of electric power in a case where the number of operating fans in the cooling tower 70 calculated by the electric power balance computing unit 1003 is changed. In this case, the comparing unit 1004 identifies a difference in balance between different operating fans in the cooling tower 70. The comparing unit 1004 identifies the best balance of electric power out of the balance of electric power in a case where the current operation is continued and the balance of electric power in a case where the number of operating fans in the cooling tower 70 is changed on the basis of the comparison result. The comparing unit 1004 outputs the balance of electric power including at least the best identified balance of electric power to the information transferring unit 1005.

In addition, the comparing unit 1004 accumulates the difference in balance between different operating fans in the cooling tower 70 over time.

The information transferring unit 1005 outputs the balance of electric power received from the comparing unit 1004 to the diagnosis result notifying unit 110.

The diagnosis result notifying unit 110 notifies of the difference between different operating fans in the cooling tower 70 on the basis of the output of the information transferring unit 1005.

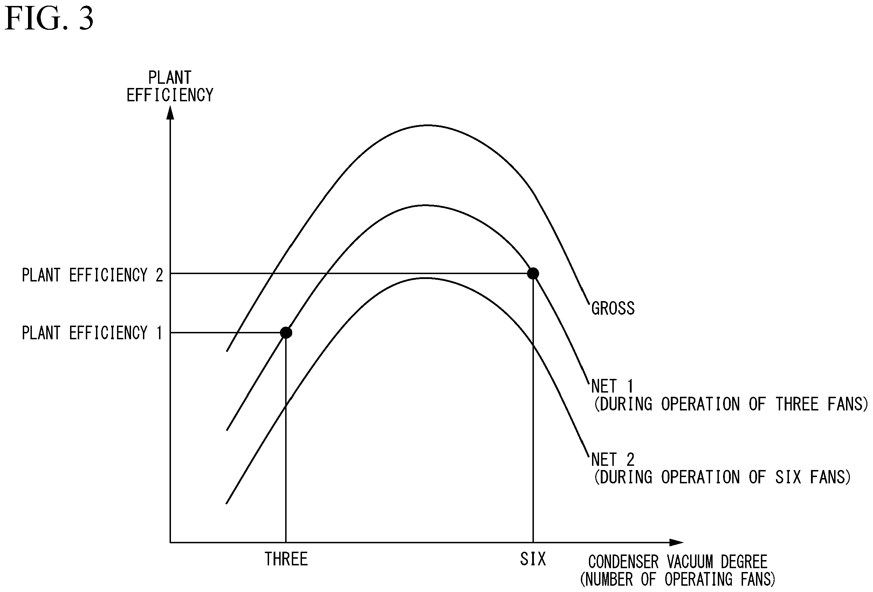

Next, the balance of electric power generation for each different number of operating fans in the cooling tower 70 calculated by the operating number optimizing unit 100 will be described with reference to Fig. 3.

Fig. 3 is a diagram illustrating a relationship between a condenser vacuum degree indicating the vacuum degree of a condenser and plant efficiency indicating power generation efficiency. Since the condenser vacuum degree is correlated with the temperature of cooling water, replacement of the condenser vacuum degree with the temperature of cooling water in Fig. 3 can be considered. In addition, since the temperature of cooling water is correlated with the atmospheric temperature, that is, correlated with the number of operating fans in the cooling tower 70, replacement of the condenser vacuum degree with the number of operating fans in the cooling tower 70 in Fig. 3 can be considered.

In Fig. 3, the plant efficiency described as gross indicates power generation efficiency of electric power generated by the generator 50. In addition, in Fig. 3, the plant efficiency described as net 1 indicates power generation efficiency in a case where electric power required for operating three cooling towers is subtracted from the electric power generated by the generator 50. In addition, in Fig. 3, the plant efficiency described as net 2 indicates power generation efficiency in a case where electric power required for operating six cooling towers is subtracted from the electric power generated by the generator 50.

Here, as described above, when the condenser vacuum degree on the horizontal axis is replaced with the number of operating fans in the cooling tower 70, three operating fans in the cooling tower 70 and six operating fans in the cooling tower 70 can be shown at corresponding positions on the horizontal axis as shown in Fig. 3. The plant efficiency described as net 1 when the number of operating fans in the cooling tower 70 on the horizontal axis is three is defined as plant efficiency 1, and the plant efficiency described as net 2 when the number of operating fans in the cooling tower 70 on the horizontal axis is six is defined as plant efficiency 2. In this case, the plant efficiency 1 is plant efficiency in a case where the number of operating fans in the cooling tower 70 is three, and the plant efficiency 2 is plant efficiency in a case where the number of operating fans in the cooling tower 70 is six.

Here, the plant efficiency can be represented as in the following Expression (1).

[Expression 1]

$$(\text{Plant efficiency}) = \frac{\text{amount of gross generated electric power} - \text{amount of in-plant power consumption}}{\text{amount of fuel}}$$

$$\cdots \ (1)$$

In Expression (1), the amount of gross generated electric power is electric power generated by the generator 50, and indicates the amount of generated electric power determined by the operation plan. The amount of generated electric power is the amount of electric power that may change from time to time depending on a demand for electric power (that is, depending on a load fluctuation (an example of a load plan)). In addition, in Expression (1), the amount of in-plant power consumption indicates the amount of electric power consumed in the plant system 1 when the generator 50 generates electric power. In addition, in Expression (1), the amount of fuel is an amount required for the generator 50 to generate the amount of power generation indicated by the gross generated electric power, and changes depending on the amount of gross electric power and gross power generation efficiency. Due to a change in the number of operating fans in the cooling tower 70, the pressure of condensing steam (generally referred to as a vacuum degree) also changes depending on a cooling temperature, and thus the final exhaust conditions of steam expanding in the steam turbine change, and the gross power generation efficiency changes. For this reason, as a result, the amount of fuel also changes. Therefore, the electric power balance computing unit 1003 uses Expression (1) to identify a difference between fuel prices indicating the total fuel price required in a case where the number of operating fans of cooling water is varied or fuel prices before and after the number of operating fans is varied (all other parts described as fuel prices may be a difference between fuel prices) on the basis of a load plan and information on prediction of the weather conditions.

In addition, the operating number optimizing unit 100 can calculate a balance of electric power for each different number of operating fans in the cooling tower 70 by subtracting a value obtained by multiplying the amount of fuel of the denominator on the right side of Expression (1) by a unit fuel price indicating the price of fuel per unit fuel amount from a value obtained by multiplying the amount of electric power of the numerator on the right side of Expression (1) by an electric power selling price per unit electric power amount with respect to each number of different operating fans in the cooling tower 70. That is, the operating number optimizing unit 100 can calculate a balance of electric power for each different number of operating fans in the cooling tower 70 using the following Expression (2).

[Expression 2]

$$\text{(Balance of electric power)} = (\text{amount of gross generated electric power} - \text{amount of in-plant power consumption}) \times \text{electric power selling price per unit electric power amount} - \text{amount of fuel} \times \text{unit fuel price per unit fuel amount} \qquad \cdots \ (2)$$

(Numerical example)

The gross generated electric power in a case where the number of operating fans in the cooling tower 70 is three and the number of operating fans in the cooling tower 70 is six is set to 100 megawatts, electric power required to operate one fan in the cooling tower 70 is set to 1 megawatt, the amount of fuel in a case where the number of operating fans in the cooling tower 70 is three is set to 210 megawatts, and the amount of fuel in a case where the number of operating fans in the cooling tower 70 is six is set to 200 megawatts.

In this case, the plant efficiency 1 is calculated as (plant efficiency 1) = (100 megawatts - 3 megawatts) ÷ (210 megawatts) = 0.462 = 46.2 percent. In addition, the plant efficiency 2 is calculated as (plant efficiency 2) = (100 megawatts - 6 megawatts) ÷ (200 megawatts) = 0.470 = 47.0 percent.

In addition, for example, in a case where the electric power selling price per megawatt is 0.03 yen and the unit fuel price per megawatt is 0.01 yen, a balance 1 of electric power in a case where the number of operating fans in the cooling tower 70 is three is calculated as (balance 1 of electric power) = 97 megawatts × 0.03 - 210 megawatts × 0.01 = 810,000 yen. In addition, a balance 2 of electric power in a case where the number of operating fans in the cooling tower 70 is six is calculated as (balance 2 of electric power) = 94 megawatts × 0.03 - 200 megawatts × 0.01 = 820,000 yen.

Meanwhile, Fig. 3 shows a case where the number of operating fans in the cooling tower 70 is three and a case where the number is six as an example in a case where the condenser vacuum degree is replaced with the number of operating fans in the cooling tower 70. However, the plant efficiency in a case where the condenser vacuum degree is replaced with the number of operating fans in the cooling tower 70 is preferably shown for each of the possible operating fans (of which the number is, for example, one to six) in the cooling tower 70, and the plant efficiency and the balance of electric power is preferably calculated for each of the possible operating fans in the cooling tower 70.

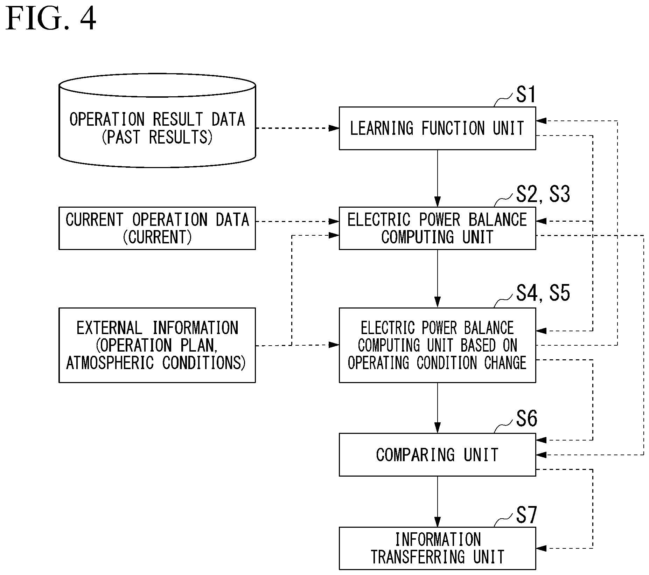

Next, processing of the operating number optimizing unit 100 will be described with reference to Fig. 4. Meanwhile, the solid-line arrows in Fig. 4 indicate the order of processing, and the broken-line arrows indicate a flow of data.

The learning function unit 1002 generates a learned model on the basis of the past operation result data (step S1). The learning function unit 1002 outputs the learned model to the electric power balance computing unit 1003.

The electric power balance computing unit 1003 receives the learned model from the learning function unit 1002. In addition, the electric power balance computing unit 1003 receives the current operating state (in Fig. 4, the current operating state and the current plant operation information are collectively described as "current operation data"). In addition, the electric power balance computing unit 1003 receives the current plant operation information. In addition, the electric power balance computing unit 1003 receives, as external information, atmospheric conditions related to the cooling conditions of the cooling tower 70 and an operation plan indicating the amount of power generation created on the basis of a demand for electric power at each time. The electric power balance computing unit 1003 identifies a curve of the plant efficiency as shown in Fig. 3 for the current number of operating fans in the cooling tower 70 by applying the current operating state including information on the current number of operating fans in the cooling tower 70, the current plant operation information including the current fuel supply amount, the degree of valve opening, and the amount of power generation, and the external information including the atmospheric conditions and the operation plan to the learned model. The electric power balance computing unit 1003 calculates the plant efficiency using Expression (1) for the current number of operating fans in the cooling tower 70 (step S2). In addition, the electric power balance computing unit 1003 computes a balance of electric power using Expression (2) for the current number of operating fans in the cooling tower 70 (step S3). The electric power balance computing unit 1003 outputs the computed balance of electric power to the comparing unit 1004.

In addition, the electric power balance computing unit 1003 receives information on the number of different operating fans in the cooling tower 70. The electric power balance computing unit 1003 identifies a curve of the plant efficiency as shown in Fig. 3 for each case where the number of operating fans in the cooling tower 70 is changed by applying the changed number of operating fans in the cooling tower 70, the current operating state, the current plant operation information, and the external information to the learned model. The electric power balance computing unit 1003 calculates the plant efficiency using Expression (1) for each case where the number of operating fans in the cooling tower 70 is changed (step S4). In addition, the electric power balance computing unit 1003 computes a balance of electric power using Expression (2) for each case where the number of operating fans in the cooling tower 70 is changed (step S5). The electric power balance computing unit 1003 outputs the computed balance of electric power to the comparing unit 1004.

The comparing unit 1004 receives a balance of electric power for the current number of operating fans in the cooling tower 70 and a balance of electric power for each case where the number of operating fans in the cooling tower 70 is changed from the electric power balance computing unit 1003. The comparing unit 1004 compares the balance of electric power for the current number of operating fans in the cooling tower 70 with the balance of electric power for each case where the number of operating fans in the cooling tower 70 is changed. The comparing unit 1004 identifies the best balance of electric power out of the balance of electric power for the current number of operating fans in the cooling tower 70 and the balance of electric power for each case where the number of operating fans in the cooling tower 70 is changed (step S6). The comparing unit 1004 outputs a balance of electric power including at least the best identified balance of electric power to the information transferring unit 1005.

The information transferring unit 1005 outputs the balance of electric power received from the comparing unit 1004 to the diagnosis result notifying unit 110 (step S7).

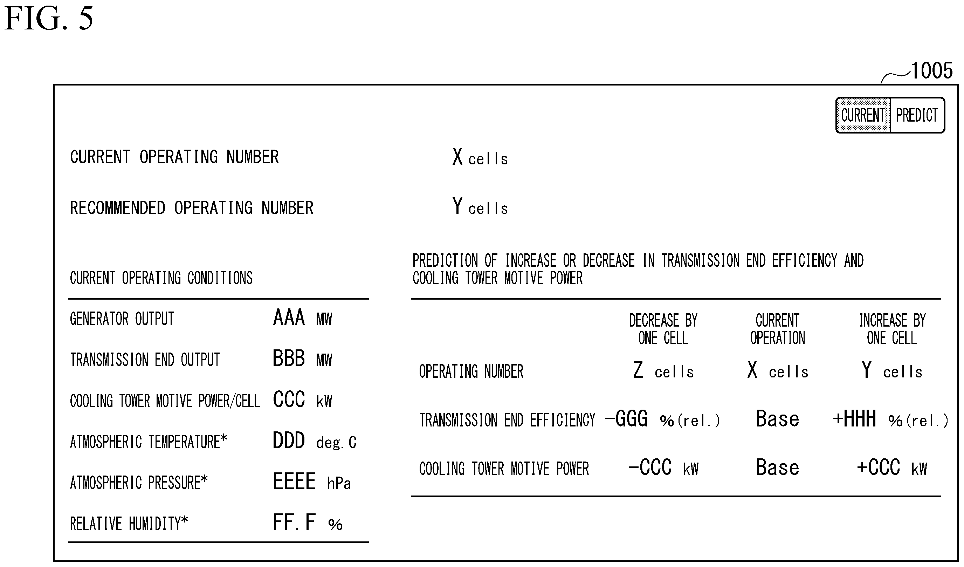

The diagnosis result notifying unit 110 notifies of the difference between different operating fans in the cooling tower 70 on the basis of the output of the information transferring unit 1005. For example, the diagnosis result notifying unit 110 displays contents as shown in Figs. 5 to 7. Meanwhile, in Figs. 5 to 7, a display example is shown as an example of a notification, but the notification in the present invention is not limited to the display. For example, the diagnosis result notifying unit 110 may perform notification by reading out the same content as display content in synthetic voice.

The display shown in Fig. 5 includes a current operating number (that is, the current number of operating fans, or an example of information relating to generated electric power), a recommended operating number (that is, the recommended number of operating fans, or an example of information relating to generated electric power), current operating conditions (an example of information relating to generated electric power), prediction of increase or decrease in transmission end efficiency (that is, efficiency in a case where electric power consumed during electric power generation is subtracted from a generator output) (an example of information relating to generated electric power), and prediction of increase or decrease in motive power of the cooling tower (an example of information relating to generated electric power). Meanwhile, the diagnosis result notifying unit 110 causes a display unit to display at least one of the current operating number, the recommended operating number, the current operating conditions, the prediction of increase or decrease in transmission end efficiency, and the prediction of increase or decrease in motive power of the cooling tower. The current operating number in Fig. 5 is the current number of operating fans in the cooling tower 70. The recommended operating number in Fig. 5 is the number of operating fans in the cooling tower 70 by which the balance of electric power becomes the best in a case where the number of operating fans is increased or decreased. The current operating conditions in Fig. 5 include an output of the generator 50, a transmission end output (that is, electric power obtained by subtracting the electric power consumed during electric power generation from the generator output), motive power per cooling tower (power consumption per cooling tower in operation), and atmospheric conditions (atmospheric temperature, atmospheric pressure, or relative humidity). The prediction of increase or decrease in transmission end efficiency and motive power of the cooling tower in Fig. 5 includes a change in transmission end efficiency and a change in motive power of the cooling tower in a case where the number of operating fans in the cooling tower 70 is changed by ± 1 with respect to the current number of operating fans in the cooling tower 70. Meanwhile, when the number of operating fans is increased and decreased with respect to the current number of operating fans in the cooling tower 70, by performing display such as display, for example, with blue characters when characteristics such as efficiency are improved and display, for example, with red characters when the characteristics are deteriorated so that the relative merits of the characteristics can be visually understood, an operator can intuitively judge whether the current number of operating fans is good or bad, and can judge the number of operating fans in the cooling tower which is appropriate for operation.

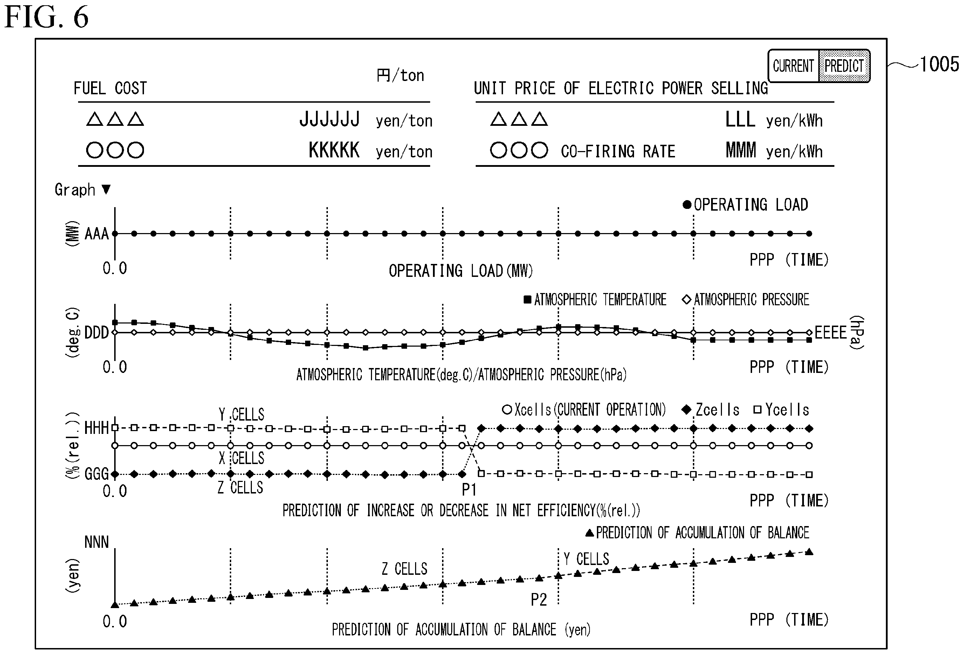

The display shown in Fig. 6 includes fuel cost (an example of information relating to generated electric power) and the unit price of electric power selling (an example of information relating to generated electric power). In addition, the display shown in Fig. 6 includes a graph showing a change in an operating load over time (an example of information relating to generated electric power), a graph showing a change in atmospheric conditions over time (atmospheric temperature and atmospheric pressure in Fig. 6) (an example of information relating to generated electric power), a graph showing prediction of increase or decrease in net efficiency over time (an example of information relating to generated electric power), and a graph (an example of information relating to generated electric power) showing prediction of accumulation of a balance over time (an example of information relating to generated electric power). Meanwhile, the diagnosis result notifying unit 110 causes the display unit to display at least one of the fuel cost, the unit price of electric power selling, the change in an operating load over time, the change in the atmospheric conditions over time, the prediction of increase or decrease in net efficiency over time, and the prediction of accumulation of a balance over time. In the prediction of increase or decrease in net efficiency shown in Fig. 6, operation in Z cells is the most efficient until time P1, and operation in Y cells is most efficient after time P1. Meanwhile, the balance of electric power is not simply determined by the efficiency of operation alone. For example, as shown in Fig. 6, the balance is accumulated by the effect of the operation in Z cells until time P2, and the balance is accumulated by the effect of the operation in Y cells in transition to time P2. In this manner, by visually showing how many cooling towers the effect of operating the cooling towers contributes to the accumulation of the balance by a difference in line color, line type, or the like, and operator can intuitively ascertain the accumulation of the balance in a case where the optimal number of operating fans continues to be selected.

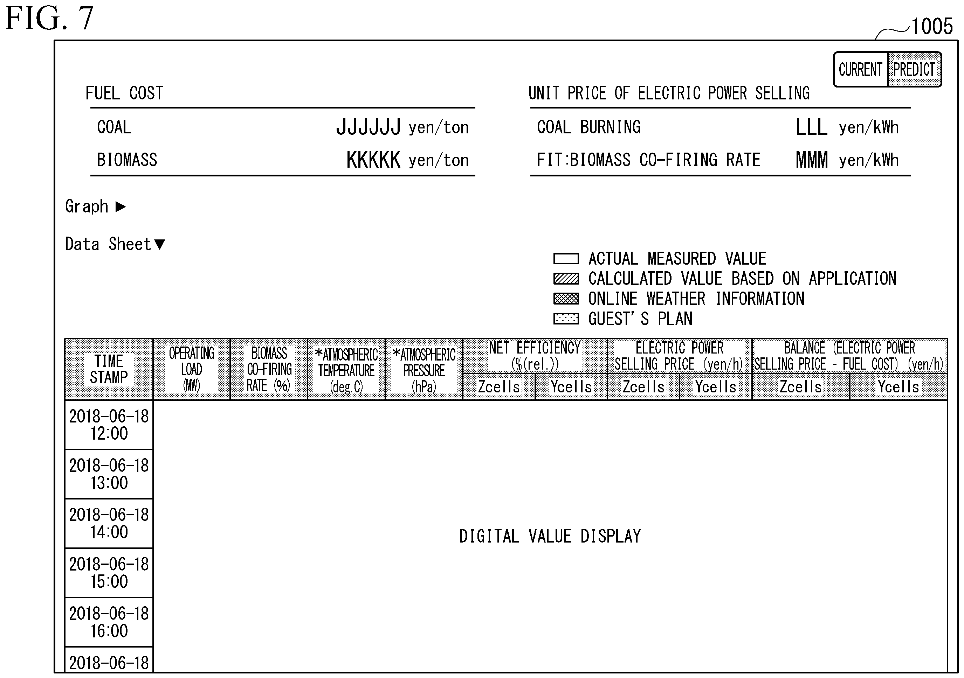

The display shown in Fig. 7 includes fuel cost (an example of information relating to generated electric power) and the unit price of electric power selling (an example of information relating to generated electric power). In addition, the display shown in Fig. 7 includes an operating load for each predetermined time stamp (for example, every hour) (an example of information relating to generated electric power), a biomass co-firing rate for each predetermined time stamp (equivalent to a mixing rate between coal and biomass in fuel)(an example of information relating to generated electric power), atmospheric conditions for each predetermined time stamp (an example of information relating to generated electric power), net efficiency for each predetermined time stamp (an example of information relating to generated electric power), an electric power selling price for each predetermined time stamp (an example of information relating to generated electric power), and a balance for each predetermined time stamp (an example of information relating to generated electric power). Meanwhile, the diagnosis result notifying unit 110 causes the display unit to display at least one of the fuel cost, the unit price of electric power selling, the operating load for each predetermined time stamp, the biomass co-firing rate for each predetermined time stamp, the atmospheric conditions for each predetermined time stamp, the net efficiency for each predetermined time stamp, the electric power selling price for each predetermined time stamp, and the balance for each predetermined time stamp. In this manner, by causing the display unit to simultaneously display future predicted values for different operating fans, an operator can intuitively judge whether the future number of operating fans is good or bad. Meanwhile, in each embodiment of the present invention, the time stamp is an example indicating a date and time, and also includes a future date and time.

The operator confirms the content of display performed by the diagnosis result notifying unit 110 as shown in Figs. 5 to 7, and determines actual control content. Meanwhile, the operator may change the plant efficiency by adjusting the biomass co-firing rate (the mixing rate between coal and biomass in fuel).

Meanwhile, in a case where a fuel price, the selling price of generated electric power, or the like fluctuates over time, the operating number optimizing unit 100 may use information on prediction of a fuel price and information on prediction of the selling price of generated electric power.

The information on prediction of a fuel price is information including a predicted value by which a fluctuation in a future fuel price is predicted. The predicted value is preferably calculated by obtaining, for example, a function indicating a relationship between the fluctuation in a fuel price for the latest predetermined period (for example, for half a year) and the elapse of time and substituting a time indicating the future into the function.

In addition, the information on prediction of the selling price of generated electric power is information including a predicted value by which a future fluctuation in the selling price of generated electric power is predicted. The predicted value is preferably calculated by obtaining, for example, a function indicating a relationship between the fluctuation in the selling price of generated electric power for the latest predetermined period (for example, for half a year) and the elapse of time and substituting a time indicating the future into the function.

The electric power balance computing unit 1003 preferably identifies, when the fuel price fluctuates over time, the fuel price in a case where the motive power of a cooling water cooling device is varied using the information on prediction of the fuel price on the basis of a load plan and information on prediction of the weather conditions, and preferably identifies, when the selling price of generated electric power fluctuates over time, at least a balance that is greater than a balance obtained by generated electric power in a case where the current operation is continued using the information on prediction of the selling price of generated electric power on the basis of the selling price of generated electric power according to the load plan and the fuel price.

Meanwhile, in a case where electric power to be generated is stored in a power storage device or the like, and a timing of electric power storage and a timing at which the electric power to be stored is sold are different from each other, the operating number optimizing unit 100 may identify at least a balance that is greater than a balance obtained by the generated electric power in a case where the current operation is continued on the basis of at least one of a difference between a fuel price according to the timing of electric power storage and a fuel price according to the timing of electric power selling and a difference between the selling price of the generated electric power according to the timing of electric power storage and the selling price of the generated electric power according to the timing of electric power selling.

For example, in a case where electric power to be generated is stored in a power storage device in the nighttime and the electric power to be stored is sold in the daytime (an example in a case where a timing of electric power storage and a timing at which the electric power to be stored is sold are different from each other), the electric power balance computing unit 1003 preferably identifies the fuel price in a case where the motive power of the cooling water cooling device is varied on the basis of the load plan and the information on prediction of the weather conditions and further on the basis of a difference between a fuel price per unit generated electric power calculated by the amount of fuel used and the amount of power generation in a case where electric power is generated in the nighttime and a fuel price per unit generated electric power calculated by the amount of fuel used and the amount of power generation in a case where electric power is generated in the daytime (an example of a difference between a fuel price according to the timing of electric power storage and a fuel price according to the timing of electric power selling). In addition, the electric power balance computing unit 1003 preferably identifies at least a balance that is greater than a balance obtained by the generated electric power in a case where the current operation is continued on the basis of the selling price of the generated electric power according to the load plan and the fuel price and further on the basis of a difference between the selling price of generated electric power in the nighttime and the selling price of generated electric power in the daytime (an example of a difference between the selling price of the generated electric power according to the timing of electric power storage and the selling price of the generated electric power according to the timing of electric power selling).

Specifically, for example, in a case where electric power generated in the nighttime and stored in a power storage device is sold in the daytime, or a case where a fuel price per unit generated electric power in the nighttime is cheaper than a fuel price per unit generated electric power in the daytime, the electric power balance computing unit 1003 preferably applies a fuel price calculated by multiplying a fuel price calculated in a case where the same amount of electric power is generated in the daytime by a predetermined coefficient smaller than 1 as a fuel price (that is, applies a fuel price between a fuel price calculated with respect to the nighttime and a fuel price calculated with respect to the daytime as a fuel price), and preferably identifies the fuel price in a case where the motive power of the cooling water cooling device is varied. In addition, in a case where electric power generated in the nighttime and stored in a power storage device is sold in the daytime, or a case where the selling price of generated electric power in the nighttime is cheaper than the selling price of generated electric power in the daytime, the electric power balance computing unit 1003 preferably applies the selling price of generated electric power calculated by multiplying the selling price of generated electric power in the daytime by a predetermined coefficient smaller than 1 as the selling price of generated electric power (that is, applies the selling price of generated electric power between the selling price of generated electric power calculated with respect to the nighttime and the selling price of generated electric power calculated with respect to the daytime as the selling price of generated electric power), and preferably identifies at least a balance that is greater than a balance obtained by the generated electric power in a case where the current operation is continued.

Hereinbefore, the plant system 1 according to an embodiment of the present invention has been described.

In the plant system 1, the operating number optimizing unit 100 includes the electric power balance computing unit 1003 that identifies the fuel price in a case where the motive power of the cooling water cooling device is varied on the basis of the load plan and the information on prediction of the weather conditions and identifies at least the greatest balance due to the generated electric power on the basis of the selling price of the generated electric power according to the load plan and the fuel price.

This makes it possible for the electric power balance computing unit 1003 to estimate a balance. The operating number optimizing unit 100 can estimate a profit from generated electric power in the plant system 1 that generates electric power using a steam turbine. As a result, the operating number optimizing unit 100 can provide a degree of profit to another device (such as, for example, the diagnosis result notifying unit 110). In addition, the diagnosis result notifying unit 110 can provide a degree of profit to a plant operator or the like by causing a display unit or the like to display the degree of profit.

"Providing a degree of profit" in the embodiment of the present invention involves information indicating a degree of profit being transmitted to another device and information indicating a degree of profit being transmitted to a person.

In addition, with the plant system 1 according to an embodiment of the present invention, it is possible to present a method of setting an operation for making a high profit to an operator of a plant in which electric power is generated by the plant system 1. As a result, it is possible to suggest a quantitative criterion to the operator, and for the operator to perform an operation for easily making a high profit.

Generally, the number of operating fans in a cooling tower has a tendency to be influenced by the atmospheric conditions, and it is difficult to ascertain a fluctuation in a profit in consideration of a fluctuation in the selling price of generated electric power according to a demand for electric power. For this reason, it is difficult for an inexperienced operator to identify the optimal number of operating fans. According to the plant system 1 based on an embodiment of the present invention, it is possible even for an inexperienced operator to identify the appropriate number of operating fans.

Meanwhile, in the plant system 1 according to an embodiment of the present invention, a system using a cooling tower has been described. However, in the plant system 1 according to another embodiment of the present invention, a system of direct cooling with the atmosphere may be used. In addition, in the plant system 1 according to another embodiment of the present invention, a system using seawater or river water as cooling water may be used. In the case of a system using seawater or river water as cooling water, the weather conditions in an embodiment of the present invention may be read as maritime conditions or the state of a river. In addition, in the case of seawater or river water, a control target is an operation of a pump that adjusts the flow rate of cooling water (such as the number of rotations or the blade angle of a variable blade-type pump) instead of the operation of the fan of the cooling tower 70 in an embodiment of the present invention.

Meanwhile, a case where the plant system 1 according to an embodiment of the present invention includes the learning function unit 1002 has been described. However, the plant system 1 according to another embodiment of the present invention may not include the learning function unit 1002. In this case, for example, instead of the learning function unit 1002, for example, an operator may identify plant efficiency indicating power generation efficiency with respect to a condenser vacuum degree indicating the vacuum degree of a condenser (the number of operating fans in the cooling tower 70) on the basis of the atmospheric conditions and the operation plan, and input the identified plant efficiency to the plant system 1. In addition, for example, the plant system 1 may identify the plant efficiency on the basis of the current atmospheric conditions and the current operation plan.

Meanwhile, in the processing in the embodiment of the present invention, the order of the processing may be changed insofar as appropriate processing is performed.

The storage unit 1001 and other storage devices in the embodiment of the present invention may each be provided anywhere within a range in which appropriate information is transmitted and received. In addition, a plurality of the storage units 1001 and other storage devices may exist in a range in which appropriate information is transmitted and received, and may store data in a distributed manner.

Although the embodiment of the present invention has been described, the control unit 90, the operating number optimizing unit 100, and other control units described above may have a computer system therein. The procedure of processing described above is stored in a computer readable recording medium in the format of a program, and the above processing is performed by a computer reading out and executing this program. A specific example of a computer is shown below.

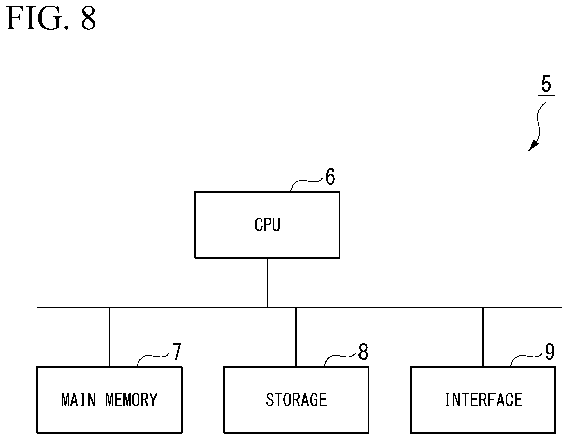

Fig. 8 is a schematic block diagram illustrating a configuration of a computer according to at least one embodiment.

As shown in Fig. 8, a computer 5 includes a CPU 6, a main memory 7, a storage 8, and an interface 9.

For example, the control unit 90, the operating number optimizing unit 100, and each of the other control units described above are mounted in the computer 5. The operation of each of the above-described processing units is stored in the storage 8 in the format of a program. The CPU 6 reads out a program from the storage 8, develops the program in the main memory 7, and executes the above-described processing in accordance with the program. In addition, the CPU 6 secures a storage area corresponding to each of the above-described storage units in the main memory 7 in accordance with a program.

Examples of the storage 8 include a hard disk drive (HDD), a solid state drive (SSD), a magnetic disc, a magnetooptic disc, a compact disc read only memory (CD-ROM), a digital versatile disc read only memory (DVD-ROM), a semiconductor memory, and the like. The storage 8 may be an internal medium connected directly to a bus of the computer 5, or may be an external medium connected to the computer 5 through the interface 9 or a communication line. In addition, in a case where this program is distributed to the computer 5 through a communication line, the computer 5 having the program distributed thereto may be developed in the main memory 7, and may execute the above-described processing. In at least one embodiment, the storage 8 is a non-transitory tangible storage medium.

In addition, the program may be a program for realizing some of the above-described functions. Further, the program may be a file that makes it possible to realize the above-described functions in combination with programs already recorded in a computer system, that is, a so-called differential file (a differential program).

While certain embodiments of the present invention have been described, these embodiments have been presented by way of example only, and are not intended to limit the scope of the invention. These embodiments described herein may be embodied in a variety of other forms, and furthermore, various additions, omissions, substitutions, and changes in the form of the embodiments described herein may be made without departing from the spirit of the present invention.

[Industrial Applicability]

According to the computing device, the system, the notifying device, the computing method, and the program according to the embodiment of the present invention, it is possible to provide a degree of profit in a plant that generates electric power using a steam turbine.

[Reference Signs List]

1 Plant system
5 Computer
6 CPU
7 Main memory
8 Storage
9 Interface
10 Mill
20 Boiler
30 Steam regulating valve
40 Steam turbine
50 Generator
60 Condenser
70 Cooling tower
80 Water supply pump
90 Control unit
100 Operating number optimizing unit
110 Diagnosis result notifying unit
1001 Storage unit
1002 Learning function unit
1003 Electric power balance computing unit
1004 Comparing unit
1005 Information transferring unit

**Claims**

1. A computing device comprising:

    a fuel price identifying unit that is configured to identify, based on a load plan and information on prediction of weather conditions, a fuel price in a case where motive power of a cooling water cooling device is varied; and
    a balance identifying unit that is configured to identify, based on a selling price of the generated electric power and the fuel price, at least a balance that is greater than a balance obtained by generated electric power according to the load plan in a case where a current operation is continued.

2. The computing device according to claim 1, wherein, the fuel price identifying unit is configured to identify the fuel price in a case where the motive power of the cooling water cooling device is varied using a future fluctuation predicted value of the fuel price when the fuel price fluctuates over time, and
   the balance identifying unit is configured to identify at least the balance that is greater than the balance obtained by the generated electric power in a case where the current operation is continued using a future fluctuation predicted value of the selling price of the generated electric power when the selling price of the generated electric power fluctuates over time.

3. The computing device according to claim 1 or 2, wherein the balance identifying unit is configured to identify conditions including at least the motive power corresponding to the identified balance that is greater than the balance obtained by the generated electric power in a case where the current operation is continued.

4. The computing device according to any one of claims 1 to 3, further comprising a comparing unit that compares two balances,

wherein the fuel price identifying unit is configured to identify the fuel price with respect to current motive power of the cooling device,

the balance identifying unit is configured to identify a balance for the current motive power and the balance that is greater than the balance obtained by the generated electric power in a case where the current operation is continued, and

the comparing unit is configured to identify a difference between the balance for the current motive power and the balance that is greater than the balance obtained by the generated electric power in a case where the current operation is continued by comparing the balance for the current motive power with the balance that is greater than the balance obtained by the generated electric power in a case where the current operation is continued.

5. The computing device according to claim 4, wherein the comparing unit is configured to accumulate the identified difference over time.

6. The computing device according to any one of claims 1 to 5, further comprising an information transferring unit that outputs the balance.

7. The computing device according to any one of claims 1 to 6, wherein, the fuel price identifying unit is configured to identify, based on a difference between a fuel price according to the timing of electric power storage and a fuel price according to the timing of electric power selling, the fuel price in a case where the motive power of the cooling water cooling device is varied when a timing at which the generated electric power is generated and stored and a timing at which the stored generated electric power is sold are different from each other, and

the balance identifying unit is configured to identify, based on a difference between a selling price of generated electric power according to the timing of electric power storage and a selling price of generated electric power according to the timing of electric power selling, at least the balance that is greater than the balance obtained by the generated electric power in a case where the current operation is continued when the timing at which the generated electric power is generated and stored and the timing at which the stored generated electric power is sold are different from each other.

8. A system comprising:

the computing device according to any one of claims 1 to 7; and
a notifying device that is configured to notify of information relating to the generated electric power.

9. The system according to claim 8, wherein the information relating to the generated electric power includes at least a current operating number and a recommended operating number; prediction of increase or decrease in transmission end efficiency in a case of the current operating number and transmission end efficiency in a case where the current operating number is changed; or prediction of increase or decrease in motive power of a cooling tower in a case of the current operating number and motive power of the cooling tower in a case where the current operating number is changed.

10. The system according to claim 8 or 9, wherein the information relating to the generated electric power includes prediction of accumulation of a balance over time.

11. The system according to any one of claims 8 to 10, wherein the information relating to the generated electric power includes at least one of an operating load for each predetermined time stamp, a biomass co-firing rate for each predetermined time stamp, atmospheric conditions for each predetermined time stamp, net efficiency for each predetermined time stamp, an electric power selling price for each predetermined time stamp, and a balance for each predetermined time stamp.

12. A notifying device that is configured to display information relating to generated electric power according to a load plan or atmospheric conditions.

13. The notifying device according to claim 12, wherein the information relating to the generated electric power includes at least a current operating number and a recommended operating number, or transmission end efficiency in a case of the current operating number, motive power of a cooling tower in a case of the current operating number, prediction of increase or decrease in transmission end efficiency in a case where the current operating number is changed, and prediction of increase or decrease in the motive power of the cooling tower in a case where the current operating number is changed.

14. The notifying device according to claim 12 or 13, wherein the information relating to the generated electric power includes prediction of accumulation of a balance over time.

15. The notifying device according to any one of claims 12 to 14, wherein the information relating to the generated electric power includes at least one of an operating load for each predetermined time stamp, a biomass co-firing rate for each predetermined time stamp, atmospheric conditions for each predetermined time stamp, net efficiency for each predetermined time stamp, an electric power selling price for each predetermined time stamp, and a balance for each predetermined time stamp.

16. A computing method comprising:

Identifying, based on a load plan and information on prediction of weather conditions, a fuel price in a case where motive power of a cooling water cooling device is varied; and
Identifying, based on a selling price of the generated electric power and the fuel price, at least a balance that is greater than a balance obtained by generated electric power according to the load plan in a case where a current operation is continued.

17. A program causing a computer to execute:

Identifying, based on a load plan and information on prediction of weather conditions, a fuel price in a case where motive power of a cooling water cooling device is varied; and
Identifying, based on a selling price of the generated electric power and the fuel price, at least a balance that is greater than a balance obtained by generated electric power according to the load plan in a case where a current operation is continued.

FIG. 1

EP 3 872 742 A1

# FIG. 2

OPERATING NUMBER OPTIMIZING UNIT — 100

1001 — STORAGE UNIT

1003 — ELECTRIC POWER BALANCE COMPUTING UNIT

1005 — INFORMATION TRANSFERRING UNIT

1002 — LEARNING FUNCTION UNIT

1004 — COMPARING UNIT

# FIG. 3

FIG. 4

```
┌─────────────────────┐
│ OPERATION RESULT DATA│ ─ ─ ─ ─ ─>  ┌──────────────────────┐  ⌇S1
│   (PAST RESULTS)     │             │ LEARNING FUNCTION UNIT│
└─────────────────────┘             └──────────────────────┘
                                              │
                                              ▼
┌─────────────────────┐             ┌──────────────────────┐  ⌇S2, S3
│ CURRENT OPERATION DATA│ ─ ─ ─ ─ ─>│  ELECTRIC POWER BALANCE│
│     (CURRENT)        │             │   COMPUTING UNIT      │
└─────────────────────┘             └──────────────────────┘
                                              │
                                              ▼
┌─────────────────────┐             ┌──────────────────────┐  ⌇S4, S5
│ EXTERNAL INFORMATION │             │  ELECTRIC POWER BALANCE│
│  (OPERATION PLAN,    │ ─ ─ ─ ─ ─>  │  COMPUTING UNIT BASED ON│
│ ATMOSPHERIC CONDITIONS)│           │ OPERATING CONDITION CHANGE│
└─────────────────────┘             └──────────────────────┘
                                              │
                                              ▼
                                    ┌──────────────────────┐  ⌇S6
                                    │    COMPARING UNIT     │
                                    └──────────────────────┘
                                              │
                                              ▼
                                    ┌──────────────────────┐  ⌇S7
                                    │     INFORMATION       │
                                    │  TRANSFERRING UNIT    │
                                    └──────────────────────┘
```

# FIG. 5

| | CURRENT | PREDICT |
|---|---|---|

CURRENT OPERATING NUMBER      X cells

RECOMMENDED OPERATING NUMBER      Y cells

CURRENT OPERATING CONDITIONS

PREDICTION OF INCREASE OR DECREASE IN TRANSMISSION END EFFICIENCY AND COOLING TOWER MOTIVE POWER

| | | |
|---|---|---|
| GENERATOR OUTPUT | AAA | MW |
| TRANSMISSION END OUTPUT | BBB | MW |
| COOLING TOWER MOTIVE POWER/CELL | CCC | kW |
| ATMOSPHERIC TEMPERATURE* | DDD | deg. C |
| ATMOSPHERIC PRESSURE* | EEEE | hPa |
| RELATIVE HUMIDITY* | FF. F | % |

| | DECREASE BY ONE CELL | CURRENT OPERATION | INCREASE BY ONE CELL |
|---|---|---|---|
| OPERATING NUMBER | Z cells | X cells | Y cells |
| TRANSMISSION END EFFICIENCY | −GGG %(rel.) | Base | +HHH %(rel.) |
| COOLING TOWER MOTIVE POWER | −CCC kW | Base | +CCC kW |

EP 3 872 742 A1

# FIG. 6

EP 3 872 742 A1

# FIG. 7

~1005

| CURRENT | PREDICT |

**FUEL COST**

| COAL | JJJJJJ yen/ton |
| BIOMASS | KKKKK yen/ton |

**UNIT PRICE OF ELECTRIC POWER SELLING**

| COAL BURNING | LLL yen/kWh |
| FIT:BIOMASS CO-FIRING RATE | MMM yen/kWh |

Graph ▶

Data Sheet▼

☐ ACTUAL MEASURED VALUE
▨ CALCULATED VALUE BASED ON APPLICATION
▦ ONLINE WEATHER INFORMATION
▧ GUEST'S PLAN

| TIME STAMP | OPERATING LOAD (MW) | BIOMASS CO-FIRING RATE (%) | *ATMOSPHERIC TEMPERATURE (deg.C) | *ATMOSPHERIC PRESSURE (hPa) | NET EFFICIENCY (%(rel.)) | | ELECTRIC POWER SELLING PRICE (yen/h) | | BALANCE (ELECTRIC POWER SELLING PRICE - FUEL COST) (yen/h) | |
|---|---|---|---|---|---|---|---|---|---|---|
| | | | | | Zcells | Ycells | Zcells | Ycells | Zcells | Ycells |
| 2018-06-18 12:00 | | | | | | | | | | |
| 2018-06-18 13:00 | | | | | | | | | | |
| 2018-06-18 14:00 | | | DIGITAL VALUE DISPLAY | | | | | | | |
| 2018-06-18 15:00 | | | | | | | | | | |
| 2018-06-18 16:00 | | | | | | | | | | |
| 2018-06-18 | | | | | | | | | | |

FIG. 8

5

6

CPU

7
MAIN MEMORY

8
STORAGE

9
INTERFACE

## INTERNATIONAL SEARCH REPORT

| International application No. |
| --- |
| PCT/JP2019/037635 |

**A. CLASSIFICATION OF SUBJECT MATTER**
Int.Cl. G06Q50/06(2012.01)i, H02J3/00(2006.01)i

According to International Patent Classification (IPC) or to both national classification and IPC

**B. FIELDS SEARCHED**

Minimum documentation searched (classification system followed by classification symbols)
Int.Cl. G06Q50/06, H02J3/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2011-232903 A (SEKISUI CHEMICAL CO., LTD.) 17 November 2011, paragraphs [0058], [0063], [0072], [0081]–[0083], [0095], [0123] (Family: none) | 12, 14–15<br>1–11, 13, 16–17 |
| X<br>A | JP 59-4884 A (HITACHI, LTD.) 11 January 1984, page 1, right column, lines 7–11, page 2, lower right column, lines 8–11 (Family: none) | 12–13<br>1–11, 14–17 |
| A | JP 2014-1741 A (MITSUBISHI HEAVY INDUSTRIES, LTD.) 09 January 2014, paragraphs [0002]–[0007] (Family: none) | 1–17 |

☐ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 December 2019 (04.12.2019) | 17 December 2019 (17.12.2019) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

**Patent documents cited in the description**

- JP 2018199358 A

- JP 2013155963 A